# EUROPEAN PATENT SPECIFICATION

(11) **EP 4 524 012 B1**
(45) Date of publication and mention of the grant of the patent: **29.07.2026**
(21) Application number: 24175024.9
(22) Date of filing: 09.05.2024
(51) Int. Cl.: B62M 3/08

(54) **FOLDABLE PEDAL**
KLAPPBARES PEDAL
PÉDALE PLIABLE

(30) Priority: 15.09.2023 TW 112135185
(43) Date of publication of application: 19.03.2025
(73) Proprietor: Marwi Taiwan Industrial Co., Ltd., Taichung City 437 (TW)
(72) Inventor: PAI, CHENG-CHUNG, 437 Taichung City (TW); WANG, HSI-HUI, 437 Taichung City (TW)
(74) Representative: Lang, Christian

(56) References cited:
- CN-U- 201 980 372
- CN-U- 207 595 178
- CN-Y- 2 470 234
- JP-U- 3 020 645
- US-B1- 7 228 761

## Description

### BACKGROUND OF THE INVENTION

### Field of the Invention

The present invention relates to a foldable pedal.

### Description of the Prior Art

A bicycle is driven by the rider pedaling on the pedals. The pedal is an important component used to bear the pedaling force and drive the crank and sprocket(s) to rotate. The arrangement relationship of the pedal and the crank can considerably affect the rider's pedaling experience, stability of pedaling, and efficiency of power transmission.

However, it is mostly concerned in this technical field to focus on improving influence of the pedal on the bicycle in the riding state, but it is ignored that the influence of the pedal on the bicycle in the stop state. Since the pedal is protrusive from the outermost two sides in the width direction of the bicycle, when the bicycle is in the stop state, the protrusive pedal can easily collide with people or objects around the rider, causing damage to people or objects or causing the bicycle to tip over. Moreover, for a foldable bicycle, the protrusive pedals can also cause damage to the bicycle, and the overall volume of the bicycle cannot be highly reduced after folding.

Document JP 3 020645 U discloses a foldable pedal according to the preamble of claim 1.

Document CN 2 470 234 Y discloses a conventional foldable pedal, which comprises an inner pivot base, an outer pedal frame pivoted outside the inner pivot base, and a positioning unit which penetrates the outer pedal frame, wherein the positioning unit is provided with a locating rod, a set of elastic elements arranged at the outer side of the locating rod, and an actuator which is movably pivoted to the locating rod.

The present invention is arisen to obviate or at least mitigate the above-mentioned disadvantages.

### SUMMARY OF THE INVENTION

The main object of the present invention is to provide a foldable pedal which can effectively reduce the size of the foldable pedal and the size of the bicycle in the parked or folded state.

To achieve the above and other objects, a foldable pedal according to claim 1 is provided, wherein the foldable pedal includes: a pedal frame including two first frame portions, a second frame portion and two blocking portions, the two first frame portions respectively extending in an action direction, the second frame portion being transversely connected to and between the two first frame portions to define an inner region, the two blocking portions respectively projecting from the two first frame portions and being gradually close to each other in a direction transverse to the action direction; a base including a main body, a positioning body and at least one first coupling unit, the positioning body being disposed on the main body, the at least one first coupling unit being disposed on the positioning body, the main body being rotatably connected to the pedal frame so that the pedal frame is swingable relative to the base between an unfolded position and a folded position, wherein when the pedal frame is located in the unfolded position, the positioning body is located in the inner region and is blockable by the two blocking portions in the action direction, and when the pedal frame is located in the folded position, the positioning body is released from the inner region; and a positioning member including at least one second coupling unit engageable with the at least one first coupling unit, and located between the two first frame portions and movable in the inner region in the action direction; wherein when the at least one first coupling unit and the at least one second coupling unit disengaged from each other, the pedal frame is freely swingable relative to the base between the unfolded position and the folded position, and when the at least one first coupling unit and the at least one second coupling unit are engaged with each other, the pedal frame is restricted in the unfolded position.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of an exemplary embodiment of the present invention;
Fig. 2 is a breakdown drawing of an exemplary embodiment of the present invention;
Fig. 3 is a drawing showing a pedal frame located in an unfolded position according to an exemplary embodiment of the present invention;
Fig. 4 is a cross-sectional view of Fig. 3;
Fig. 5 is a drawing showing the pedal frame located in a folded position according to an exemplary embodiment of the present invention; and
Fig. 6 is a cross-sectional view of Fig. 5.

### DETAILED DESCRIPTION OF THE PREFERRED EMBODIMENTS

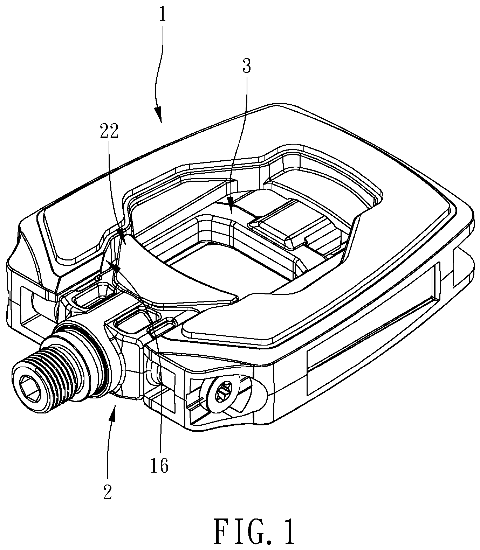

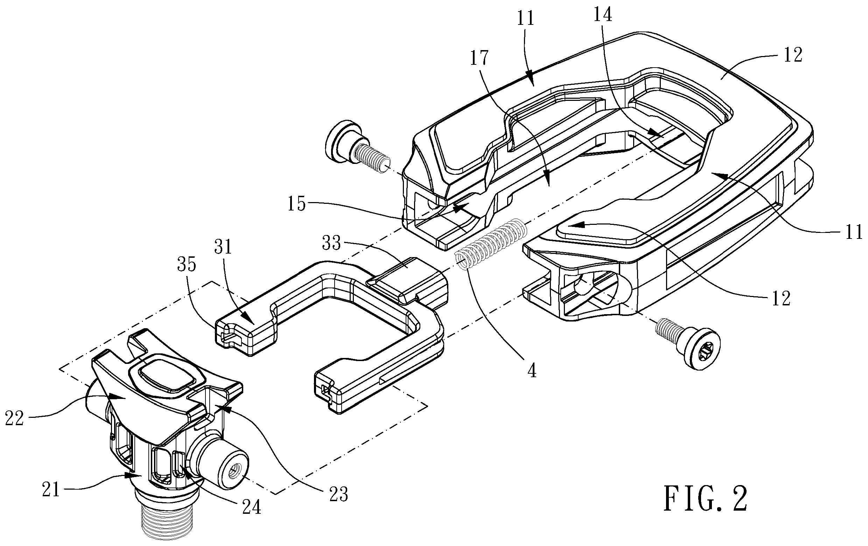

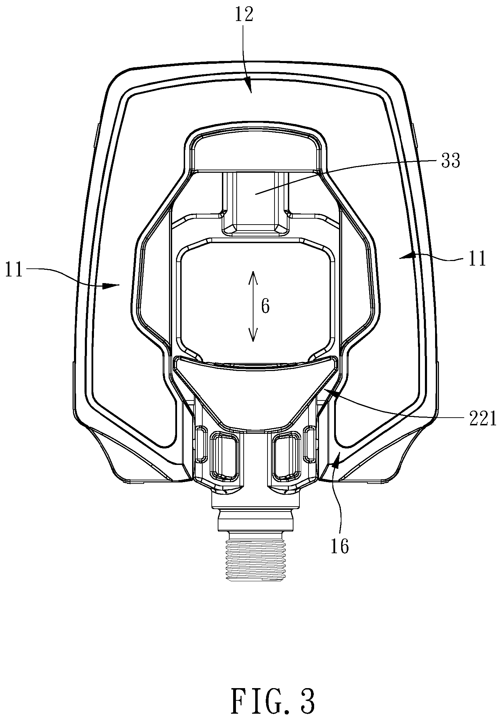

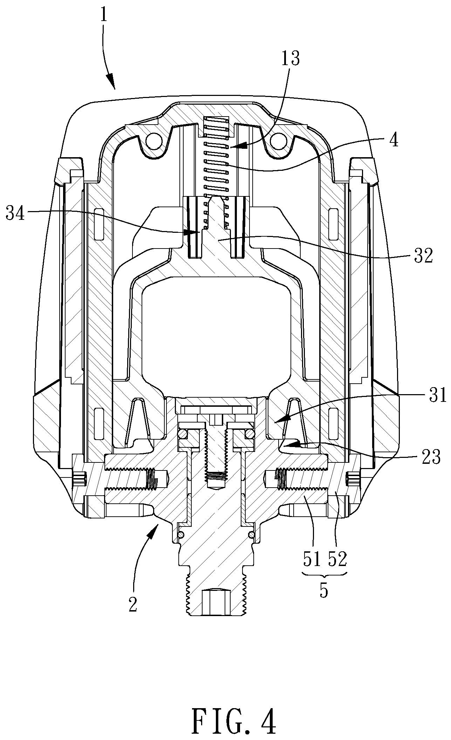

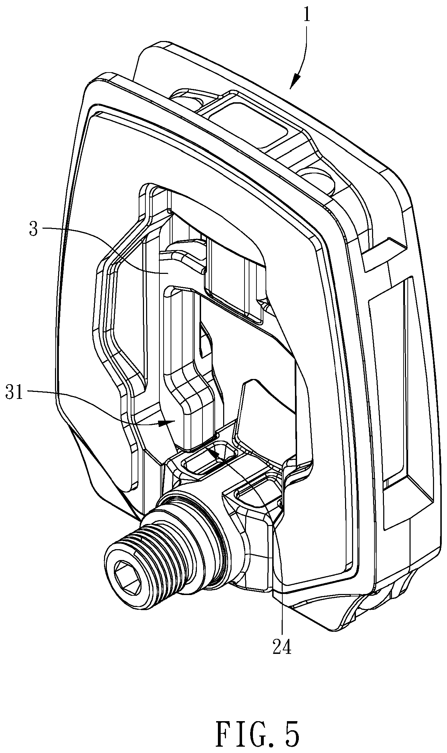

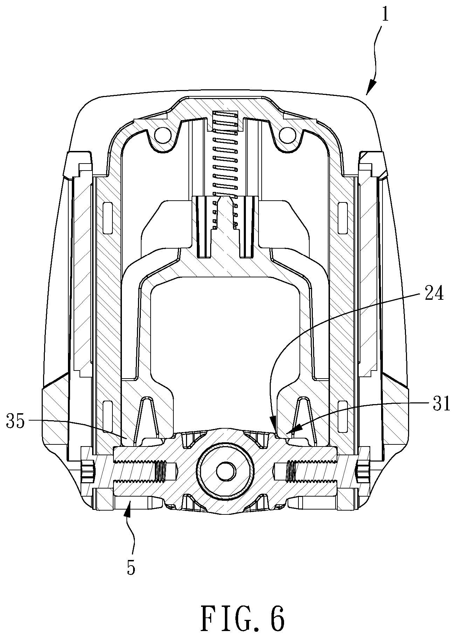

Please refer to Figs. 1 to 6 for an exemplary embodiment of the present invention. A foldable pedal of the present invention includes a pedal frame 1, a base 2 and a positioning member 3.

The pedal frame 1 includes two first frame portions 11, a second frame portion 12 and two blocking portions 16, the two first frame portions 11 respectively extends in an action direction 6, the second frame portion 12 is transversely connected to and between the two first frame portions 11 to define an inner region 17, and the two blocking portions 16 respectively project from the two first frame portions 11 and are gradually close to each other in a direction transverse to the action direction 6.

The base 2 includes a main body 21, a positioning body 22 and at least one first coupling unit 23, the positioning body 22 is disposed on the main body 21, the at least one first coupling unit 23 is disposed on the positioning body 22, and the main body 21 is rotatably connected to the pedal frame 1 so that the pedal frame 1 is swingable relative to the base 2 between an unfolded position and a folded position. When the pedal frame 1 is located in the unfolded position, the positioning body 22 is located in the inner region 17 and is blockable by the two blocking portions 16 in the action direction 6, and when the pedal frame 1 is located in the folded position, the positioning body 22 is released from the inner region 17.

Specifically, when the pedal frame 1 is located in the unfolded position, the positioning body 22 is blocked by the two blocking portions 16 in the action direction 6, which can ensure that the pedal frame 1 cannot disengage from the base 2 in the action direction 6 after being stepped on so that it can effectively improve the combination of the base 2 and the pedal frame 1 to maintain riding safety.

The positioning member 3 includes at least one second coupling unit 31 engageable with and the at least one first coupling unit 23, the positioning member 3 is located between the two first frame portions 11 and movable in the inner region 17 in the action direction 6. Specifically, the pedal frame 1 further includes two grooves 15 extending in the action direction 6 and through the first frame portion 11 and the blocking portion 16, respectively, and two sides of the positioning member 3 are slidably inserted in the two grooves 15.

When the at least one first coupling unit 23 and the at least one second coupling unit 31 are disengaged from each other, the pedal frame 1 is freely swingable relative to the base 2 between the unfolded position and the folded position, and when the at least one first coupling unit 23 and the at least one second coupling unit 31 are engaged with each other, the pedal frame 1 is restricted in the unfolded position, for stable pedaling. In this embodiment, the at least one first coupling unit includes two first coupling units 23 which are grooves, and the at least one second coupling unit includes two second coupling units 31 which are projections.

Specifically, the main body 21 is rotatably connected to and between the two blocking portions 16, and a distance between two sides 221 of the positioning body 22 facing the two first frame portions 11 increases in a direction away from the main body 21 so that a largest distance between the two sides 221 is larger than a largest distance between the two blocking portions 16, achieving the purpose of interfering and blocking each other in the action direction 6. Each side 221 is inclined to the action direction 6, and an end of each of the two blocking portions 16 adjacent to the second frame portion 12 matches one of the two sides 221 of the positioning body 22.

Specifically, the two second coupling units 31 are respectively disposed on the two sides 221 so that a larger space can be provided between the two sides 221 for arrangement of the second coupling unit 31, and thus the second coupling unit 31 provides a large area/region for combination thereof with the first coupling unit 23 and effectively improves engagement and evenly distributes the stress.

The foldable pedal further includes an elastic member 4, and the elastic member 4 is abutted against and between the pedal frame 1 and the base 2 so that the positioning member 3 has a tendency to move toward the positioning body 22, which provides automatic locking to prevent loosening and release.

According to the present invention, the positioning member 3 further includes a first limitation portion 32, the first limitation portion 32 is disposed on a side of the positioning member 3 facing the second frame portion 12, the second frame portion 12 further includes a second limitation portion 13, the second limitation portion 13 and the first limitation portion 32 are coaxially arranged, and two ends of the elastic member 4 are positioned to the first limitation portion 32 and the second limitation portion 13, respectively, to provide stable combination of the elastic member 4 to the positioning member 3 and the second frame portion 12. The first limitation portion 32 may be a shaft, and the second limitation portion 13 may be a hole.

According to the present invention, the positioning member 3 further includes an insertion portion 33 and a first slot 34, the insertion portion 33 is generally rectangular and tubular, the first slot 34 is disposed on the insertion portion 33 and extends in the action direction 6, the first limitation portion 32 is received in the first slot 34, the second frame portion 12 includes a second slot 14 extending in the action direction 6, the second limitation portion 13 is received in the second slot 14, the first slot 34 is in communication with the second slot 14, the positioning member 3 is movable between the unfolded position and the folded position, and the insertion portion 33 is normally inserted within the second slot 14 so that the elastic member 4 is entirely not within the inner region 17 and can operate smoothly without interference.

The base 2 may further include at least one third coupling unit 24, and the at least one third coupling unit 24 is disposed on the main body 21. In this embodiment, the at least one third coupling unit includes four third coupling units 24 which are grooves, and each of opposing sides of the main body 21 includes two of the four third coupling units 24. When the pedal frame 1 is located in the folded position, the positioning member 3 moves toward the base 2 so that the two second coupling units 31 and the main body 21 and the four third coupling units 24 are engaged with each other and the pedal frame 1 is restricted in the folded position. As the position of the pedal frame 1 varies, the positioning member 3 can move in the action direction 6 to abut different positions of the base 2 to maintain the position of the pedal frame 1.

In one embodiment, the foldable pedal further includes a rotatable connection unit 5, the rotatable connection unit 5 is rotatably connected to the two first frame portions 11 and the main body 21, and the positioning member 3 further includes at least one abutting portion 35. In this embodiment, the at least one abutting portion includes two abutting portions 35, when the two second coupling units 31 and two of the four third coupling units 24 engaged with each other, the two abutting portions 35 are abutted against the rotatable connection unit 5, which improves the positioning ability of the positioning member 3 so that the pedal frame 1 can resist gravity, shaking or other unexpected external forces and maintain the folded position.

In this embodiment, the rotatable connection unit 5 includes two sleeves 51 and two threaded members 52, the two sleeves 51 project from the main body 21 and inserted in the two grooves 15 on the two blocking portions 16, and the two threaded members 52 are disposed through the two first frame portions 11 and screwed to the two sleeves 51. When the pedal frame 1 is located in the unfolded position, even the two threaded members 52 become loose, the two blocking portions 16 can block the positioning body 22 in the action direction 6, so that the pedal frame 1 is still stably combined with the base 2 and will not separate, allowing rider to continue the pedaling.

Although particular embodiments of the invention have been described in detail for purposes of illustration, various modifications and enhancements may be made without departing from the scope of the invention. Accordingly, the invention is not to be limited except as by the appended claims.

## Claims

1. A foldable pedal including:
a pedal frame (1) including two first frame portions (11), a second frame portion (12) and two blocking portions (16), the two first frame portions (11) respectively extending in an action direction (6), the second frame portion (12) being transversely connected to and between the two first frame portions (11) to define an inner region (17), the two blocking portions (16) respectively projecting from the two first frame portions (11) and being gradually close to each other in a direction transverse to the action direction (6);
a base (2) including a main body (21), a positioning body (22) and at least one first coupling unit (23), the positioning body (22) being disposed on the main body (21), the at least one first coupling unit (23) being disposed on the positioning body (22), the main body (21) being rotatably connected to the pedal frame (1) so that the pedal frame (1) is swingable relative to the base (2) between an unfolded position and a folded position, wherein when the pedal frame (1) is located in the unfolded position, the positioning body (22) is located in the inner region (17) and is blockable by the two blocking portions (16) in the action direction (6), and when the pedal frame (1) is located in the folded position, the positioning body (22) is released from the inner region (17);
a positioning member (3) including at least one second coupling unit (31) engageable with the at least one first coupling unit (23), and located between the two first frame portions (11) and movable in the inner region (17) in the action direction (6); and
an elastic member (4), wherein the elastic member (4) is abutted against and between the pedal frame (1) and the base (2);
wherein when the at least one first coupling unit (23) and the at least one second coupling unit (31) disengaged from each other, the pedal frame (1) is freely swingable relative to the base (2) between the unfolded position and the folded position, and when the at least one first coupling unit (23) and the at least one second coupling unit (31) are engaged with each other, the pedal frame (1) is restricted in the unfolded position;
**characterized in that**
the positioning member (3) further includes a first limitation portion (32), the first limitation portion (32) is disposed on a side of the positioning member (3) facing the second frame portion (12), the second frame portion (12) further includes a second limitation portion (13), the second limitation portion (13) and the first limitation portion (32) are coaxially arranged, and two ends of the elastic member (4) are positioned to the first limitation portion (32) and the second limitation portion (13), respectively;
the positioning member (3) further includes an insertion portion (33) and a first slot (34), the first slot (34) is disposed on the insertion portion (33) and extends in the action direction (6), the first limitation portion (32) is received in the first slot (34), the second frame portion (12) includes a second slot (14) extending in the action direction (6), the second limitation portion (13) is received in the second slot (14), the first slot (34) is in communication with the second slot (14), the positioning member (3) is movable between the unfolded position and the folded position, and the insertion portion (33) is normally inserted within the second slot (14) so that the elastic member (4) is entirely not within the inner region (17).

2. The foldable pedal of claim **1,** wherein the pedal frame (1) further includes two grooves (15) extending in the action direction (6) and through the first frame portion (11) and the blocking portion (16), respectively, and two sides of the positioning member (3) are slidably inserted in the two grooves (15), respectively.

3. The foldable pedal of claim **1,** wherein the main body (21) is rotatably connected to and between the two blocking portions (16), and a distance between two sides (221) of the positioning body (22) facing the two first frame portions (11) increases in a direction away from the main body (21) so that a largest distance between the two sides (221) of the positioning body (22) is larger than a largest distance between the two blocking portions (16).

4. The foldable pedal of claim 3, wherein each of the two sides (221) of the positioning body (22) is inclined to the action direction (6), and an end of each of the two blocking portions (16) adjacent to the second frame portion (12) matches one of the two sides (221) of the positioning body (22).

5. The foldable pedal of claim 1, wherein the base (2) further includes at least one third coupling unit (24), the at least one third coupling unit (24) is disposed on the main body (21), and when the pedal frame (1) is located in the folded position, the positioning member (3) is movable toward the base (2) so that the at least one second coupling unit (31) and the at least one third coupling unit (24) are engaged with each other so that the pedal frame (1) is restricted in the folded position.

6. The foldable pedal of claim 5, further including a rotatable connection unit (5), wherein the rotatable connection unit (5) is rotatably connected to the two first frame portions (11) and the main body (21), the positioning member (3) further includes at least one abutting portion (35), and when the at least one second coupling unit (31) and the at least one third coupling unit (24) are engaged with each other, the at least one abutting portion (35) is abutted against the rotatable connection unit (5).

7. The foldable pedal of claim 1, wherein the pedal frame (1) further includes two grooves (15) extending in the action direction (6) and through the first frame portion (11) and the blocking portion (16), respectively, and two sides of the positioning member (3) are slidably inserted in the two grooves (15), respectively; the main body (21) is rotatably connected to and between the two blocking portions (16), and a distance between two sides (221) of the positioning body (22) facing the two first frame portions (11) increases in a direction away from the main body (21) so that a largest distance between the two sides (221) of the positioning body (22) is larger than a largest distance between the two blocking portions (16); each of the two sides (221) of the positioning body (22) is inclined to the action direction (6), and end of each of the two blocking portions (16) adjacent to the second frame portion (12) matches one of two sides (221) of the positioning body (22); the base (2) further includes at least one third coupling unit (24), the at least one third coupling unit (24) disposed on the main body (21), and when the pedal frame (1) is located in the folded position, the positioning member (3) is movable toward the base (2) so that the at least one second coupling unit (31) and the at least one third coupling unit (24) are engaged with each other so that the pedal frame (1) is restricted in the folded position; the foldable pedal further includes a rotatable connection unit (5), the rotatable connection unit (5) is rotatably connected to the two first frame portions (11) and the main body (21), the positioning member (3) further includes at least one abutting portion (35), and when the at least one second coupling unit (31) and the at least one third coupling unit (24) are engaged with each other, the at least one abutting portion (35) is abutted against the rotatable connection unit (5); the first limitation portion (32) is a shaft, and the second limitation portion (13) is a hole; the insertion portion (33) is generally rectangular and tubular; the at least one first coupling unit includes two first coupling units (23) which are grooves, the at least one second coupling unit includes two second coupling units (31) which are projections, the at least one third coupling unit (24) includes four third coupling units (24) which are grooves, and each of opposing sides of the main body (21) includes two of the four third coupling units (24); the rotatable connection unit (5) includes two sleeves (51) and two threaded members (52), the two sleeves (51) project from the main body (21) and inserted in the two grooves (15) extending on the two blocking portions (16), and the two threaded members (52) are disposed through the two first frame portions (11) and screwed to the two sleeves (51), respectively.

## Patentansprüche

1. Klappbares Pedal, welches umfasst:
einen Pedalrahmen (1), der zwei erste Rahmenabschnitte (11), einen zweiten Rahmenabschnitt (12) und zwei Blockierabschnitte (16) umfasst, wobei sich die zwei ersten Rahmenabschnitte (11) jeweils in einer Aktionsrichtung (6) erstrecken, wobei der zweite Rahmenabschnitt (12) quer mit und zwischen den beiden ersten Rahmenabschnitten (11) verbunden ist, um einen inneren Bereich (17) zu definieren, wobei die zwei Blockierabschnitte (16) jeweils von den zwei ersten Rahmenabschnitten (11) vorstehen und sich in einer Richtung quer zur Aktionsrichtung (6) allmählich annähern;
eine Basis (2), die einen Hauptkörper (21), einen Positionierkörper (22) und mindestens eine erste Kopplungseinheit (23) umfasst, wobei der Positionierkörper (22) an dem Hauptkörper (21) angeordnet ist, wobei die mindestens eine erste Kopplungseinheit (23) an dem Positionierkörper (22) angeordnet ist, wobei der Hauptkörper (21) drehbar mit dem Pedalrahmen (1) verbunden ist, sodass der Pedalrahmen (1) relativ zur Basis (2) zwischen einer ausgeklappten Position und einer eingeklappten Position schwenkbar ist, wobei, wenn sich der Pedalrahmen (1) in der ausgeklappten Position befindet, sich der Positionierkörper (22) in dem inneren Bereich (17) befindet und durch die zwei Blockierabschnitte (16) in der Aktionsrichtung (6) blockierbar ist, und wobei, wenn sich der Pedalrahmen (1) in der eingeklappten Position befindet, der Positionierkörper (22) aus dem inneren Bereich (17) entlassen wird;
ein Positionierelement (3), das mindestens eine zweite Kopplungseinheit (31) umfasst, die mit der mindestens einen ersten Kopplungseinheit (23) in Eingriff bringbar ist, und sich zwischen den zwei ersten Rahmenabschnitten (11) befindet und in dem inneren Bereich (17) in der Aktionsrichtung (6) beweglich ist; und
ein elastisches Element (4), wobei das elastische Element (4) an dem Pedalrahmen (1) und der Basis (2) anliegt und dazwischen liegt;
wobei, wenn die mindestens eine erste Kopplungseinheit (23) und die mindestens eine zweite Kopplungseinheit (31) voneinander gelöst sind, der Pedalrahmen (1) relativ zur Basis (2) zwischen der ausgeklappten Position und der eingeklappten Position frei schwenkbar ist, und wobei, wenn die mindestens eine erste Kopplungseinheit (23) und die mindestens eine zweite Kopplungseinheit (31) miteinander in Eingriff stehen, der Pedalrahmen (1) in der ausgeklappten Position begrenzt ist;
**dadurch gekennzeichnet, dass**
das Positionierelement (3) ferner einen ersten Begrenzungsabschnitt (32) umfasst, wobei der erste Begrenzungsabschnitt (32) an einer Seite des Positionierelements (3) angeordnet ist, die dem zweiten Rahmenabschnitt (12) zugewandt ist, wobei der zweite Rahmenabschnitt (12) ferner einen zweiten Begrenzungsabschnitt (13) umfasst, wobei der zweite Begrenzungsabschnitt (13) und der erste Begrenzungsabschnitt (32) koaxial angeordnet sind, und zwei Enden des elastischen Elements (4) sind jeweils zu dem ersten Begrenzungsabschnitt (32) und dem zweiten Begrenzungsabschnitt (13) positioniert;
das Positionierelement (3) ferner einen Einführabschnitt (33) und einen ersten Schlitz (34) umfasst, wobei der erste Schlitz (34) an dem Einführabschnitt (33) angeordnet ist und sich in der Aktionsrichtung (6) erstreckt, wobei der erste Begrenzungsabschnitt (32) in dem ersten Schlitz (34) aufgenommen ist, wobei der zweite Rahmenabschnitt (12) einen zweiten Schlitz (14) umfasst, der sich in der Aktionsrichtung (6) erstreckt, wobei der zweite Begrenzungsabschnitt (13) in dem zweiten Schlitz (14) aufgenommen ist, wobei der erste Schlitz (34) mit dem zweiten Schlitz (14) in Verbindung steht, wobei das Positionierelement (3) zwischen der ausgeklappten Position und der eingeklappten Position beweglich ist, und wobei der Einführabschnitt (33) normalerweise in den zweiten Schlitz (14) eingeführt ist, sodass sich das elastische Element (4) vollständig außerhalb des inneren Bereichs (17) befindet.

2. Klappbares Pedal nach Anspruch 1, bei welchem der Pedalrahmen (1) ferner zwei Nuten (15) umfasst, die sich in der Aktionsrichtung (6) und jeweils durch den ersten Rahmenabschnitt (11) und den Blockierabschnitt (16) erstrecken, und wobei zwei Seiten des Positionierelements (3) jeweils verschiebbar in die beiden Nuten (15) eingesetzt sind.

3. Klappbares Pedal nach Anspruch 1, bei welchem der Hauptkörper (21) drehbar mit und zwischen den beiden Blockierabschnitten (16) verbunden ist, und wobei ein Abstand zwischen zwei Seiten (221) des Positionierkörpers (22), die den zwei ersten Rahmenabschnitten (11) zugewandt sind, in eine Richtung weg vom Hauptkörper (21) zunimmt, sodass ein größter Abstand zwischen den beiden Seiten (221) des Positionierkörpers (22) größer ist als ein größter Abstand zwischen den beiden Blockierabschnitten (16).

4. Klappbares Pedal nach Anspruch 3, bei welchem jede der zwei Seiten (221) des Positionierkörpers (22) zu der Aktionsrichtung (6) geneigt ist, und ein Ende von jedem der zwei Blockierabschnitte (16), das zu dem zweiten Rahmenabschnitt (12) benachbart ist, mit einer der zwei Seiten (221) des Positionierkörpers (22) zusammenpasst.

5. Klappbares Pedal nach Anspruch 1, bei welchem die Basis (2) ferner mindestens eine dritte Kopplungseinheit (24) umfasst, wobei die mindestens eine dritte Kopplungseinheit (24) an dem Hauptkörper (21) angeordnet ist, und wenn sich der Pedalrahmen (1) in der eingeklappten Position befindet, das Positionierelement (3) in Richtung der Basis (2) bewegbar ist, sodass die mindestens eine zweite Kopplungseinheit (31) und die mindestens eine dritte Kopplungseinheit (24) miteinander in Eingriff kommen, sodass der Pedalrahmen (1) in der eingeklappten Position gesperrt ist.

6. Klappbares Pedal nach Anspruch 5, welches ferner eine drehbare Verbindungseinheit (5) umfasst, wobei die drehbare Verbindungseinheit (5) drehbar mit den zwei ersten Rahmenabschnitten (11) und dem Hauptkörper (21) verbunden ist, wobei das Positionierelement (3) ferner mindestens einen Anlageabschnitt (35) umfasst, und wobei, wenn die mindestens eine zweite Kopplungseinheit (31) und die mindestens eine dritte Kopplungseinheit (24) miteinander in Eingriff stehen, der mindestens eine Anlageabschnitt (35) an der drehbaren Verbindungseinheit (5) anliegt.

7. Klappbares Pedal nach Anspruch 1, bei welchem der Pedalrahmen (1) ferner zwei Nuten (15) umfasst, die sich in der Aktionsrichtung (6) und jeweils durch den ersten Rahmenabschnitt (11) und den Blockierabschnitt (16) erstrecken, und wobei zwei Seiten des Positionierelements (3) jeweils verschiebbar in die beiden Nuten (15) eingesetzt sind; der Hauptkörper (21) ist drehbar mit und zwischen den beiden Blockierabschnitten (16) verbunden, und ein Abstand zwischen zwei Seiten (221) des Positionierkörpers (22), die den zwei ersten Rahmenabschnitten (11) zugewandt sind, nimmt in eine Richtung weg vom Hauptkörper (21) zu, sodass ein größter Abstand zwischen den beiden Seiten (221) des Positionierkörpers (22) größer ist als ein größter Abstand zwischen den beiden Blockierabschnitten (16); jede der zwei Seiten (221) des Positionierkörpers (22) ist zu der Aktionsrichtung (6) geneigt, und ein Ende von jedem der zwei Blockierabschnitte (16), das zu dem zweiten Rahmenabschnitt (12) benachbart ist, passt mit einer der zwei Seiten (221) des Positionierkörpers (22) zusammen; wobei die Basis (2) ferner mindestens eine dritte Kopplungseinheit (24) umfasst, wobei die mindestens eine dritte Kopplungseinheit (24) an dem Hauptkörper (21) angeordnet ist, und wenn sich der Pedalrahmen (1) in der eingeklappten Position befindet, das Positionierelement (3) in Richtung der Basis (2) bewegbar ist, sodass die mindestens eine zweite Kopplungseinheit (31) und die mindestens eine dritte Kopplungseinheit (24) miteinander in Eingriff kommen, sodass der Pedalrahmen (1) in der eingeklappten Position gesperrt ist; wobei das klappbare Pedal ferner eine drehbare Verbindungseinheit (5) umfasst, wobei die drehbare Verbindungseinheit (5) drehbar mit den zwei ersten Rahmenabschnitten (11) und dem Hauptkörper (21) verbunden ist, wobei das Positionierelement (3) ferner mindestens einen Anlageabschnitt (35) umfasst, und wenn die mindestens eine zweite Kopplungseinheit (31) und die mindestens eine dritte Kopplungseinheit (24) miteinander in Eingriff stehen, der mindestens eine Anlageabschnitt (35) an der drehbaren Verbindungseinheit (5) anliegt; wobei der erste Begrenzungsabschnitt (32) eine Welle ist, und der zweite Begrenzungsabschnitt (13) eine Bohrung ist; wobei der Einführabschnitt (33) im Allgemeinen rechteckig und rohrförmig ist; wobei die mindestens eine erste Kopplungseinheit zwei erste Kopplungseinheiten (23) beinhaltet, welche Nuten sind, wobei die mindestens eine zweite Kopplungseinheit zwei zweite Kopplungseinheiten (31) beinhaltet, welche Vorsprünge sind, wobei die mindestens eine dritte Kopplungseinheit (24) vier dritte Kopplungseinheiten (24) beinhaltet, welche Nuten sind, und jede der gegenüberliegenden Seiten des Hauptkörpers (21) umfasst zwei der vier dritten Kopplungseinheiten (24); die drehbare Verbindungseinheit (5) umfasst zwei Hülsen (51) und zwei Gewindeelemente (52), wobei die beiden Hülsen (51) von dem Hauptkörper (21) hervorstehen und in die beiden Nuten (15) eingeführt sind, die sich an den beiden Blockierabschnitten (16) erstrecken, und wobei die beiden Gewindeelemente (52) durch die beiden ersten Rahmenabschnitte (11) hindurch angeordnet sind und jeweils an den beiden Hülsen (51) verschraubt sind.

## Revendications

1. Pédale pliable incluant :
un bloc pédale (1) incluant deux premières parties de bloc (11), une seconde partie de bloc (12) et deux parties de blocage (16), les deux premières parties de bloc (11) s'étendant respectivement dans une direction d'action (6), la seconde partie de bloc (12) étant reliée transversalement aux deux premières parties de bloc (11) et entre celles-ci pour définir une région intérieure (17), les deux parties de blocage (16) faisant saillie respectivement des deux premières parties de bloc (11) et se rapprochant progressivement l'une de l'autre dans une direction transversale à la direction d'action (6) ;
une base (2) incluant un corps principal (21), un corps de positionnement (22) et au moins une première unité de couplage (23), le corps de positionnement (22) étant disposé sur le corps principal (21), l'au moins une première unité de couplage (23) étant disposée sur le corps de positionnement (22), le corps principal (21) étant relié de manière rotative au bloc pédale (1) de sorte que le bloc pédale (1) puisse pivoter par rapport à la base (2) entre une position dépliée et une position repliée, dans laquelle lorsque le bloc pédale (1) est situé en position dépliée, le corps de positionnement (22) est situé dans la région intérieure (17) et peut être bloqué par les deux parties de blocage (16) dans la direction d'action (6), et lorsque le bloc pédale (1) est situé en position repliée, le corps de positionnement (22) est libéré de la région intérieure (17) ;
un élément de positionnement (3) incluant au moins une deuxième unité de couplage (31) pouvant s'engager avec l'au moins une première unité de couplage (23), et située entre les deux premières parties de bloc (11) et mobile dans la région intérieure (17) dans la direction d'action (6) ; et
un élément élastique (4), dans lequel l'élément élastique (4) est appuyé contre le bloc pédale (1) et la base (2) et entre ceux-ci ;
dans laquelle lorsque l'au moins une première unité de couplage (23) et l'au moins une deuxième unité de couplage (31) sont désengagées l'une de l'autre, le bloc pédale (1) peut pivoter librement par rapport à la base (2) entre la position dépliée et la position pliée, et lorsque l'au moins une première unité de couplage (23) et l'au moins une deuxième unité de couplage (31) sont engagées l'une avec l'autre, le bloc pédale (1) est bloqué en position dépliée ;
**caractérisée en ce que**
l'élément de positionnement (3) inclut en outre une première partie de limitation (32), la première partie de limitation (32) est disposée sur un côté de l'élément de positionnement (3) faisant face à la seconde partie de bloc (12), la seconde partie de bloc (12) inclut en outre une seconde partie de limitation (13), la seconde partie de limitation (13) et la première partie de limitation (32) sont disposées coaxialement, et les deux extrémités de l'élément élastique (4) sont positionnées respectivement sur la première partie de limitation (32) et la seconde partie de limitation (13) ;
l'élément de positionnement (3) inclut en outre une partie d'insertion (33) et une première fente (34), la première fente (34) est disposée sur la partie d'insertion (33) et s'étend dans la direction d'action (6), la première partie de limitation (32) est reçue dans la première fente (34), la seconde partie du bloc (12) inclut une seconde fente (14) s'étendant dans la direction d'action (6), la seconde partie de limitation (13) est reçue dans la seconde fente (14), la première fente (34) est en communication avec la seconde fente (14), l'élément de positionnement (3) est mobile entre la position dépliée et la position pliée, et la partie d'insertion (33) est normalement insérée dans la seconde fente (14) de sorte que l'élément élastique (4) ne se trouve pas entièrement dans la région intérieure (17).

2. Pédale pliable selon la revendication 1, dans laquelle le bloc pédale (1) inclut en outre deux rainures (15) s'étendant dans la direction d'action (6) et traversant respectivement la première partie de bloc (11) et la partie de blocage (16), et les deux côtés de l'élément de positionnement (3) sont insérés respectivement de manière coulissante dans les deux rainures (15).

3. Pédale pliable selon la revendication 1, dans laquelle le corps principal (21) est relié de manière rotative aux deux parties de blocage (16) et entre celles-ci, et une distance entre les deux côtés (221) du corps de positionnement (22) faisant face aux deux premières parties de bloc (11) augmente dans une direction s'éloignant du corps principal (21) de sorte qu'une distance maximale entre les deux côtés (221) du corps de positionnement (22) soit supérieure à une distance maximale entre les deux parties de blocage (16).

4. Pédale pliable selon la revendication 3, dans laquelle chacun des deux côtés (221) du corps de positionnement (22) est incliné par rapport à la direction d'action (6), et une extrémité de chacune des deux parties de blocage (16) adjacentes à la seconde partie du bloc (12) correspond à l'un des deux côtés (221) du corps de positionnement (22).

5. Pédale pliable selon la revendication 1, dans laquelle la base (2) inclut en outre au moins une troisième unité de couplage (24), l'au moins une troisième unité de couplage (24) est disposée sur le corps principal (21), et lorsque le bloc pédale (1) est situé en position pliée, l'élément de positionnement (3) est mobile vers la base (2) de sorte que l'au moins une deuxième unité de couplage (31) et l'au moins une troisième unité de couplage (24) soient engagées l'une avec l'autre de sorte que le bloc pédale (1) soit retenu en position pliée.

6. Pédale pliable selon la revendication 5, incluant en outre une unité de liaison rotative (5), dans laquelle l'unité de liaison rotative (5) est reliée de manière rotative aux deux premières parties de bloc (11) et au corps principal (21), l'élément de positionnement (3) inclut en outre au moins une partie d'appui (35), et lorsque l'au moins une deuxième unité de couplage (31) et l'au moins une troisième unité de couplage (24) sont engagées l'une avec l'autre, l'au moins une partie d'appui (35) est appuyée contre l'unité de liaison rotative (5).

7. Pédale pliable selon la revendication 1, dans laquelle le bloc pédale (1) inclut en outre deux rainures (15) s'étendant dans la direction d'action (6) et traversant respectivement la première partie de bloc (11) et la partie de blocage (16), et les deux côtés de l'élément de positionnement (3) sont insérés respectivement de manière coulissante dans les deux rainures (15) ; le corps principal (21) est relié de manière rotative aux deux parties de blocage (16), et la distance entre les deux côtés (221) du corps de positionnement (22) faisant face aux deux premières parties de bloc (11) augmente dans une direction s'éloignant du corps principal (21) de sorte que la distance maximale entre les deux côtés (221) du corps de positionnement (22) soit supérieure à la distance maximale entre les deux parties de blocage (16) ; chacun des deux côtés (221) du corps de positionnement (22) est incliné par rapport à la direction d'action (6), et l'extrémité de chacune des deux parties de blocage (16) adjacentes à la seconde partie de bloc (12) correspond à l'un des deux côtés (221) du corps de positionnement (22) ; la base (2) inclut en outre au moins une troisième unité de couplage (24), l'au moins une troisième unité de couplage (24) étant disposée sur le corps principal (21), et lorsque le bloc pédale (1) est en position pliée, l'élément de positionnement (3) se déplace vers la base (2) de sorte que l'au moins une deuxième unité de couplage (31) et l'au moins une troisième unité de couplage (24) soient engagées l'une avec l'autre de sorte que le bloc pédale (1) soit maintenu en position pliée ; la pédale pliable inclut en outre une unité de liaison rotative (5), l'unité de liaison rotative (5) est reliée de manière rotative aux deux premières parties de bloc (11) et au corps principal (21), l'élément de positionnement (3) inclut en outre au moins une partie d'appui (35), et lorsque l'au moins une deuxième unité de couplage (31) et l'au moins une troisième unité de couplage (24) sont engagées l'une avec l'autre, l'au moins une partie d'appui (35) est appuyée contre l'unité de liaison rotative (5) ; la première partie de limitation (32) est un arbre, et la deuxième partie de limitation (13) est un trou, la partie d'insertion (33) est généralement rectangulaire et tubulaire ; l'au moins une première unité de couplage inclut deux premières unités de couplage (23) qui sont des rainures, l'au moins une deuxième unité de couplage inclut deux deuxièmes unités de couplage (31) qui sont des saillies, l'au moins une troisième unité de couplage (24) inclut quatre troisièmes unités de couplage (24) qui sont des rainures, et chacun des côtés opposés du corps principal (21) inclut deux des quatre troisièmes unités de couplage (24) ; l'unité de liaison rotative (5) inclut deux manchons (51) et deux éléments filetés (52), les deux manchons (51) font saillie du corps principal (21) et sont insérés dans les deux rainures (15) s'étendant sur les deux parties de blocage (16), et les deux éléments filetés (52) sont disposés à travers les deux premières parties de bloc (11) et vissés respectivement aux deux manchons (51).
